## Europäisches Patentamt
## European Patent Office
## Office européen des brevets

(11) Veröffentlichungsnummer: **0 197 253**
**B1**

(12)
# EUROPÄISCHE PATENTSCHRIFT

(45) Veröffentlichungstag der Patentschrift:
**11.05.88**

(51) Int. Cl.⁴: **G 01 G 19/00**, G 01 G 23/36, G 01 G 21/28, G 01 G 19/413

(21) Anmeldenummer: **86101384.5**

(22) Anmeldetag: **03.02.86**

(54) **Präzisionswaage mit elektronischer Signalverarbeitung.**

(30) Priorität: **12.04.85 CH 1568/85**

(43) Veröffentlichungstag der Anmeldung:
**15.10.86 Patentblatt 86/42**

(45) Bekanntmachung des Hinweises auf die Patenterteilung:
**11.05.88 Patentblatt 88/19**

(84) Benannte Vertragsstaaten:
**DE FR GB**

(56) Entgegenhaltungen:
**EP - A - 0 111 320**
**DE - B - 2 740 822**
**US - A - 4 084 242**
**US - A - 4 330 776**

(73) Patentinhaber: **Mettler Instrumente AG, Im Langacher, CH-8606 Greifensee (CH)**

(72) Erfinder: **Lüchinger, Paul, Guldenenstrasse 49, CH-8610 Uster (CH)**

ACTORUM AG

# Beschreibung

Gegenstand der Erfindung ist eine Präzisionswaage mit elektronischer Signalverarbeitung gemäss Oberbegriff des Patentanspruches 1.

Bei einer bekannten elektronischen Waage mit Posttaxenangabe (US-A-4.084.242) ist die Speichereinheit für die Posttaxentabelle unterhalb des Bedienungsfeldes in einer nach vorne ausziehbaren Schublade untergebracht, damit bei häufig wiederkehrenden Posttaxenänderungen der Speicher für den Benützer der Waage leicht austauschbar ist, ohne dass die Waage vom jeweiligen Standort entfernt und in der Folge neu justiert werden muss.

Es ist auch bekannt, bei Bildschirmgeräten die Tastatur in einer Schublade unter dem Bildschirm unterzubringen, damit diese bei Nichtgebrauch gegen Staub geschützt zurückgeschoben werden kann (DE-GM 82 12 927.4). Die Tastatur enthält alle für die Bedienung notwendigen Elemente, so dass sie immer ausgezogen sein muss, wenn das Gerät in Betrieb ist. Es besteht folglich nicht die Möglichkeit, das Bildschirmgerät nur mit einer Tastatur auszurüsten, welche gerade nur die für die Benutzung absolut notwendigen Elemente aufweist.

Die Aufgabe der Erfindung besteht darin, eine zusätzliche Bedienungseinheit zur fest angeordneten Tastatur bei Bedarf leicht zugänglich zu machen und bei Nichtbedarf geschützt innerhalb des Gehäuses unterzubringen.

Nach der Erfindung wird diese Aufgabe gemäss den kennzeichnenden Merkmalen des Patentanspruches 1 gelöst.

Es ist damit möglich, die zusätzliche Bedienungseinheit bei Bedarf kurzfristig oder während längerer Dauer direkt vor oder neben der festen Tastatur und folglich direkt im Blickfeld der Bedienungsperson zugänglich zu machen und sie bei Nichtgebrauch aus dem Wege zu räumen. Nicht ständig benötigte Tasten, welche eine an der Waage arbeitende Hilfsperson irritieren könnten, können auf diese Weise einfach und sicher vor unbeabsichtigter Manipulation geschützt werden.

Weitere vorteilhafte Ausbildungsformen der Erfindung sind in den abhängigen Ansprüchen beschrieben.

Bei einer Ausgestaltung der Waage nach Anspruch 2 wird erreicht, dass die zusätzliche Bedienungseinheit bequem ins Waagengehäuse eingeschoben werden kann.

Die Längsführung in der Ausgestaltung nach Anspruch 3 gewährleistet eine präzise Führung der Schublade.

Bei einer Ausgestaltung der Waage nach Anspruch 4 wird verhindert, dass die Schublade vollständig aus der Aussparung herausgezogen und die Kabelverbindung beschädigt werden kann.

Mit dem als Stütze dienenden Fuss in der Ausgestaltung nach Anspruch 5 können Schwingungen durch die Betätigung der Tasten nicht auf die Waage übertragen werden.

An der Griffleiste lässt sich die zusätzliche Bedienungseinheit leicht aus der Aussparung herausziehen (Anspruch 7).

Bei der Ausgestaltung der Waage nach Anspruch 6 kann die Schublade auf den Fuss abgesenkt werden, sobald sie vollständig ausgezogen ist.

Die Tasten auf der zusätzlichen Bedienungseinheit ermöglichen die Eingabe von Daten, für welche die Tasten des Bedienungsfeldes nicht ausreichen (Anspruch 8).

Durch die Ausgestaltung nach Anspruch 9 ist eine ergonomisch einwandfreie Bedienung der Waage sichergestellt, da die Oberflächen des Bedienungsfeldes und der zusätzlichen Bedienungseinheit angenähert gleich geneigt sind.

An einem illustrierten Ausführungsbeispiel wird die Erfindung näher erläutert. Es zeigen:

Figur 1 eine perspektivische Darstellung einer Präzisionswaage mit eingeschobener zusätzlicher Bedienungseinheit,

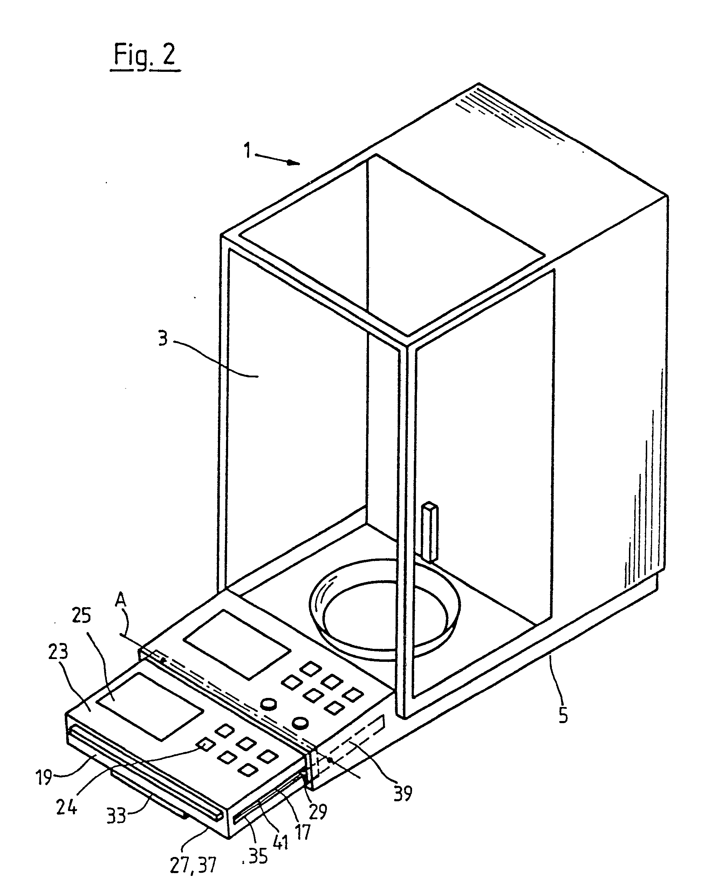

Figur 2 eine perspektivische Darstellung der Präzisionswaage mit ausgezogener Bedienungseinheit.

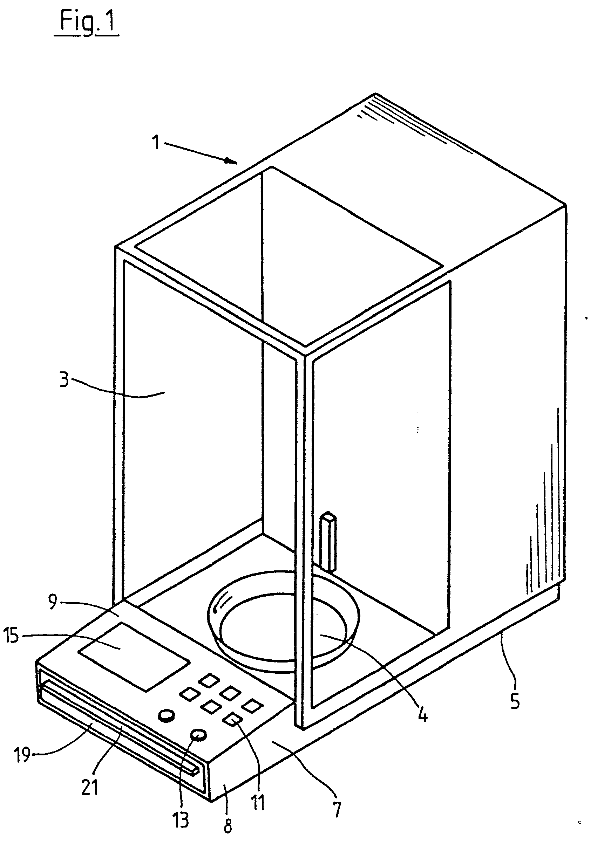

Bei einer Präzisionswaage 1 mit elektronischer Signalverarbeitung ist am Fusse ausserhalb des Wägeraumes 3 mit der Waagschale 4 am Waagengehäuse 5 ein Bedienungsfeld 7 mit einer zur Horizontalen geneigten Oberfläche 9 angebracht. Das Bedienungsfeld 7 kann am Waagengehäuse 5 befestigt oder als Teil 8 desselben ausgebildet sein. Die Oberfläche 9 kann sowohl Tasten 11 und Knöpfe 13 als auch optische Anzeigen 15 enthalten, mit denen die Hauptfunktionen der Waage wie Ein- und Ausschalten, Nullstellen und Tarieren etc. bedient werden können (Figur 1).

Unterhalb des Bedienungsfeldes 7, jedoch in demselben Gehäuseteil 8 ist eine zusätzliche Bedienungseinheit 17 vollständig versenkt eingeschoben und schliesst vorne mit ihrem freien Ende 19 das Bedienungsfeld 7 ab. Das freie Ende 19 kann als Griffleiste 21 ausgestaltet sein.

Die Bedienungseinheit 17 enthält auf ihrer Oberfläche 23, die vorzugsweise die gleiche Neigung aufweist wie die Oberfläche 9 des Bedienungsfeldes 7, Bedienungselemente wie Tasten 24 und Anzeigemittel 25, die entweder zur Bedienung der Waage 1 während spezifischen Einsätzen notwendig sind, oder die zur Einstellung der Waage vor einem bestimmten Einsatz zugänglich gemacht werden müssen. In beiden Fällen also Einsätze, die nicht dauernd, sondern nur sporadisch vorkommen.

Die Bedienungseinheit 17 kann ein eigenes Gehäuse 27 aufweisen, das lose in eine am Waagengehäuse 5 unterhalb des Bedienungsfeldes 7 angebrachte Öffnung 29 einschiebbar ist, wobei Haltemittel die Bedienungseinheit 17 in ausgezogener Stellung daran hindern, vollständig aus der Öffnung 29 herauszugleiten. Unterhalb des freien Endes 19 an der Vorderkante der Bedienungseinheit 17 kann ein Fuss 33 vorgesehen sein, welcher die Bedienungseinheit 17 abstützt. Vorzugsweise ist der Fuss 33 in der Mitte der Vorderkante angeordnet, damit auch bei einer unebenen Standfläche eine definierte Abstützung gewährleistet ist.

Die Bedienungseinheit 17 kann auch als eine an Längsführungen 35 aufgehängte, in die Öffnung 29 einschiebbare Schublade 37 ausgebildet sein. Die Längsführungen 35 können direkt an der Bedienungseinheit 17 befestigt sein.

Die seitlich oder unterhalb der Bedienungseinheit 17 bzw. der Schublade 37 angebrachten Längsführungen 35 können als Rollen- oder Gleitführungen ausgebildet sein, deren am Waagengehäuse 5 befestigter Teil 39 um eine horizontale, quer zur Auszugsrichtung liegende Achse A schwenkbar am Waagengehäuse 5 angelenkt sein kann. Die ausgezogene Bedienungseinheit 17 stützt sich dadurch jederzeit auf deren Fuss 33 ab und kann bei der Betätigung der Tasten 23 nicht unversehens in die Öffnung 29 zurückgleiten. Der an der Bedienungseinheit 17 bzw. der Schublade 37 befestigte Teil 41 kann als Nut oder als Rippe ausgebildet sein und aus dem gleichen Material wie das Gehäuse 27 bzw. die Schublade 37 bestehen.

Selbstverständlich kann die Aussparung 29 statt an der Vorderseite des Bedienungsfeldes 7 seitlich (rechts oder links) vorgesehen werden. Die zusätzliche Bedienungseinheit 17 wird bei einer solchen Ausführung seitlich ausgezogen.

Die zusätzliche Bedienungseinheit 17 kann von Anfang an bestückt sein, d.h. schon bei der Auslieferung der Präzisionswaage 1; sie kann aber auch erst nachträglich bei einem Ausbau durch die entsprechenden Zusatzelemente, wie Tasten und Anzeigeinstrumente, bestückt oder ergänzt werden, auch können gegebenenfalls zusätzliche oder alternative Bedien-Module in die zusätzliche Bedienungseinheit eingesetzt werden.

Die Erfindung vermeidet auch einen weiteren Nachteil bisher üblicher separater Zusatz-Bedienungseinheiten, die mit einem Kabel mit der Waage verbunden sind: Solche Kabel wirken nicht nur störend (wie auch die separaten Bedienungseinheiten selbst), sondern könnten auch, speziell im Labor, chemisch aggressiven Medien ausgesetzt sein und damit Schaden leiden.

## Patentansprüche

1. Präzisionswaage mit elektronischer Signalverarbeitung, umfassend ein Gehäuse für die Wägeeinheit und ein dem Gehäuse fest zugeordnetes Bedienungsfeld, dadurch gekennzeichnet, dass im das Bedienungsfeld (7) aufweisenden Gehäuseteil (8) unter dem Bedienungsfeld (7) eine gegen vorn oder zur Seite hin offene Aussparung (29) zur Aufnahme einer zusätzlichen, durch ein Kabel mit der Waage verbundenen Bedienungseinheit (17) angebracht ist.

2. Präzisionswaage nach Anspruch 1, dadurch gekennzeichnet, dass die Bedienungseinheit (17) als eine in der Aussparung (29) gleitende Schublade (37) ausgebildet ist.

3. Präzisionswaage nach Anspruch 2, dadurch gekennzeichnet, dass das Gehäuse (27) der Bedienungseinheit (17) bzw. die Schublade (37) mittels Längsführungen (35) im Gehäuse (5) geführt ist.

4. Präzisionswaage nach Anspruch 3, dadurch gekennzeichnet, dass die Schublade (37) und/oder die Längsführungen über ein das vollständige Herausziehen der Schublade (37) aus der Aussparung (29) verhinderndes Haltemittel verfügt.

5. Präzisionswaage nach einem der Ansprüche 1 bis 4, dadurch gekennzeichnet, dass die Bedienungseinheit (17) am freien Ende (19) über wenigstens einen im ausgezogenen Zustand als Stütze wirkenden Fuss (33) verfügt.

6. Präzisionswaage nach einem der Ansprüche 3 bis 5, dadurch gekennzeichnet, dass die Bedienungseinheit (17) in ausgezogenem Zustand um eine quer zur Auszugsrichtung verlaufende Achse (A) schwenkbar ist.

7. Präzisionswaage nach Anspruch 6, dadurch gekennzeichnet, dass am freien Ende (19) eine Griffleiste (21) angebracht ist.

8. Präzisionswaage nach einem der Ansprüche 1 bis 7, dadurch gekennzeichnet, dass die zusätzliche Bedienungseinheit (17) Tasten (24) und Anzeigemittel (25) umfasst.

9. Präzisionswaage nach einem der Ansprüche 1 bis 8, dadurch gekennzeichnet, dass die Oberfläche (9) des Bedienungsfeldes (7) und die Oberfläche (23) der Bedienungseinheit (17) angenähert die gleiche kleine Neigung zur Horizontalen aufweisen.

## Claims

1. A precision balance with electronic signal processing including a housing for the weighing unit and an operating panel which is fixedly associated with the housing, characterised in that disposed in the housing portion (8) having the operating panel (7) and beneath the operating panel (7) is an opening (29) which is open towards the front or the side, for accommodating an additional operating unit (17) which is connected to the balance by a cable.

2. A precision balance according to claim 1, characterised in that the operating unit (17) is in the form of a drawer (37) which slides in the opening (29).

3. A precision balance according to claim 2, characterised in that the housing (27) of the operating unit (17) or the drawer (37) is guided in the housing (5) by means of longitudinal guides (35).

4. A precision balance according to claim 3, characterised in that the drawer (37) and/or the longitudinal guides has a holding means for preventing the drawer (37) from being pulled completely out of the opening (29).

5. A precision balance according to one of claims 1 to 4, characterised in that at the free end (19) the operating unit (17) has at least one foot (33) which in the pulled-out condition acts as a support.

6. A precision balance according to one of claims 3 to 5, characterised in that in the pulled-out condition the operating unit (17) is pivotable about an axis (A) which extends transversely with respect to the direction in which the operating unit is pulled out.

7. A precision balance according to claim 6, characterised in that a gripping bar (21) is disposed at the free end (19).

8. A precision balance according to one of claims 1 to 7, characterised in that the additional operating unit (17) includes keys (24) and display means (25).

9. A precision balance according to one of claims 1 to 8, characterised in that the surface (9) of the operating panel (7) and the surface (23) of the operating unit (17) are at approximately the same small angle of inclination to the horizontal.

## Revendications

1. Balance de précision à traitement électronique des signaux, comportant un boîtier pour l'unité de pesage et une zone de commande associée de manière fixe au boîtier, caractérisée en ce qu'un évidement (29) ouvert vers l'avant ou sur le côté est ménagé dans la partie (8) de boîtier comportant la zone de commande (7), sous celle-ci, pour recevoir une unité de commande (17) supplémentaire reliée à la balance par un câble.

2. Balance de précision selon la revendication 1, caractérisée en ce que l'unité de commande (17) est un tiroir (37) coulissant dans l'évidement (29).

3. Balance de précision selon la revendication 2, caractérisée en ce que le boîtier (27) de l'unité de commande (17) ou le tiroir (37) est guidé dans le boîtier (5) au moyen d'organes de guidage longitudinaux (35).

4. Balance de précision selon la revendication 3, caractérisée en ce que le tiroir (37) et/ou les organes de guidage longitudinaux comportent des moyens de fixation empêchant le tiroir (37) de ressortir complètement de l'évidement (29).

5. Balance de précision selon l'une des revendications 1 à 4, caractérisée en ce que l'unité de commande (17) comporte sur son extrémité libre (19) au moins un pied (33) servant d'appui en position extraite.

6. Balance de précision selon l'une des revendications 3 à 5, caractérisée en ce que l'unité de commande (17) peut pivoter en position extraite autour d'un axe (A) perpendiculaire à la direction d'extraction.

7. Balance de précision selon la revendication 6, caractérisée en ce qu'une barre-poignée (21) est placée sur l'extrémité libre (19).

8. Balance de précision selon l'une des revendications 1 à 7, caractérisée en ce que l'unité de commande supplémentaire (17) comporte des touches (24) et des moyens d'affichage (25).

9. Balance de précision selon l'une des revendications 1 à 8, caractérisée en ce que la surface (9) de la zone de commande (7) et la surface (23) de l'unité de commande (17) présentent à peu près la même inclinaison par rapport à l'horizontale.

Fig.1

Fig. 2